# EUROPÄISCHE PATENTSCHRIFT

(11) **EP 2 505 286 B1**
(45) Veröffentlichungstag und Bekanntmachung des Hinweises auf die Patenterteilung: **20.01.2016**
(21) Anmeldenummer: 12162040.5
(22) Anmeldetag: 29.03.2012
(51) Int. Cl.: B23B 31/12, B23B 31/16

(54) **Spanneinrichtung und Werkstückspindel mit einer Spanneinrichtung**
Clamping device and workpiece spindle with a clamping device
Dispositif de serrage et broche porte pièce dotée d'un dispositif de serrage

(30) Priorität: 29.03.2011 DE 102011006367
(43) Veröffentlichungstag der Anmeldung: 03.10.2012
(73) Patentinhaber: Hainbuch GmbH Spannende Technik, 71672 Marbach (DE)
(72) Erfinder: Weller, Hans-Michael, 71563 Affalterbach (DE); Mandarello, Attilio, 71563 Affalterbach (DE)
(74) Vertreter: Patentanwälte Ruff, Wilhelm, Beier, Dauster & Partner mbB

(56) Entgegenhaltungen:
- DE-A1- 19 812 267
- DE-A1-102005 039 399

## Beschreibung

### Anwendungsgebiet und Stand der Technik

Die Erfindung betrifft eine Spanneinrichtung zur Festlegung eines Werkstücks gemäß dem Oberbegriff des Anspruchs 1. Dabei umfasst eine solche gattungsgemäße Spanneinrichtung ein Gehäuse, ein gegenüber dem Gehäuse in einer Axialrichtung verlagerbares Betätigungsorgan wie beispielsweise ein Zug- oder Druckrohr, zur Einleitung einer Betätigungskraft zum Zwecke der Herstellung eines Spannzustandes und mindestens eine Spanneinheit, die vorzugsweise nach nachfolgend erläuterter Art ausgebildet ist.

Diese Spanneinheit der bevorzugten Art verfügt über eine am Gehäuse entlang einer ersten. Führungsrichtung linear geführte Führungsbuchse und einem an der Führungsbuchse entlang einer zweiten Führungsrichtung, die nicht parallel zur ersten Führungsrichtung ausgerichtet ist, geführten Spannkörper. Dabei ist eine erste Kopplungseinrichtung der Spanneinheit zum mechanischen Wirkkopplung zwischen der Bewegung des Betätigungsorgans in Axialrichtung einerseits und der Bewegung der Führungsbuchse in Axialrichtung andererseits vorgesehen. Weiterhin ist eine zweite Kopplungseinrichtung der Spanneinheit zur mechanischen Wirkkopplung zwischen der Bewegung des Betätigungsorgans in Axialrichtung einerseits und der Bewegung des Spannkörpers in Axialrichtung andererseits vorgesehen. Diese Kopplungseinrichtungen der Spanneinheit einer gattungsgemäßen Spanneinrichtung sind dabei derart ausgebildet, dass eine Verlagerung des Betätigungsorgans in Axialrichtung eine Bewegung des Spannkörpers in einer zur Axialrichtung orthogonalen Radialrichtung verursacht.

Eine gattungsgemäße Spanneinrichtung ist zum Festlegen eines Werkstücks zum Zwecke der nachfolgenden Bearbeitung dieses Werkstücks vorgesehen. Es handelt,sich üblicherweise um die Spanneinrichtung an einer Arbeitsspindel, welche während der Bearbeitung in rotativer Bewegung um eine in Axialrichtung erstreckte Rotationsachse sein kann. Eine gattungsgemäße Spanneinrichtung verfügt zur insbesondere radialen Kraftbeaufschlagung des Werkstücks über die genannten Spannkörper der Spanneinheiten. Nicht zwingend, jedoch zumeist sind mindestens drei Spanneinheiten und somit mindestens drei Spannkörper vorgesehen. Zur Bewegung dieser Spannkörper gegenüber dem Gehäuse kann die genannte Gestaltung der Spanneinheiten mit den beiden voneinander abweichenden Führungsrichtungen vorgesehen sein. Aufgrund der unterschiedlichen Führungsrichtungen der Führungsbuchse am Gehäuse und des Spannkörpers an der Führungsbuchse führt eine Axialverlagerung eines Spannkörpers gegenüber der ihm zugeordneten Führungsbuchse und/oder dieser Führungsbuchse gegenüber dem Gehäuse auch zu einer radialen Verlagerung des Spannkörpers, welche zum Zwecke der Herstellung des Spannzustandes benutzt wird.

Um eine rein radiale Bewegung der Spannkörper zu erzielen, ist es nicht notwendig die erste und die zweite Kopplungseinrichtung der Spanneinheit vorzusehen. Hierfür würde es ausreichen, lediglich die erste Kopplungseinrichtung zur Verlagerung der Führungsbuchse vorzusehen. Die bei gattungsgemäßen Spanneinrichtungen vorzugsweise vorgesehenen zwei Kopplungseinrichtungen dienen dem Zweck, voneinander abweichende Axialbewegungen der Führungsbuchse einerseits und des Spannkörpers andererseits gegenüber dem Gehäuse mittels einer Axialbewegung des Spannorgans verursachen zu können, um neben der radialen Verlagerung der Spannkörper auch eine axiale Verlagerung der Spannkörper gegenüber dem Gehäuse im Zuge des Spannvorgangs zu erzielen. Dies dient dem Niederziehen des Werkstücks, also dem axialen Anpressen des Werkstücks an eine üblicherweise gehäusefest vorgesehene Anschlagsfläche, um hierdurch einen besonders gut gesicherten Spannzustand herstellen zu können und eine hohe Maßgenauigkeit gewährleisten zu können.

Eine Spanneinrichtung beschriebener gattungsgemäßer Art ist aus der DE 198 12 267 A1 bekannt. Bei dieser bildet eine Spannplatte das Betätigungsorgan. Die erste Kopplungseinrichtung zu einer hier als Führungskolben bezeichneten Führungsbuchse wird durch eine vollständige Festlegung dieses Führungskolbens an der Spannplatte erzielt. Die zweite Kopplungseinrichtung, mittels derer der hier als Zangenbolzen bezeichnete Spannkörper mit der Spannplatte verbunden ist, wird über die fest mit dem Betätigungsorgan verbundener Führungsbuchse und unter Nutzung von schräg gestellten Flächen am Spannkörper und am Gehäuse gebildet. Diese Flächen bewirken, dass unter Bezugnahme auf die Fig. 1 der DE 198 12 267 A1 eine axiale Verlagerung des Betätigungsorgans in Richtung des Werkstücks nicht nur eine radiale Verlagerung der Spannkörper voneinander weg bewirkt, sondern auch eine in Axialrichtung der Bewegung des Betätigungsorgans entgegengesetzten Bewegung der Spannkörper, so dass es zu dem genannten Niederzug kommt.

Als nachteilig an den bekannten Spanneinrichtungen wird angesehen, dass diese in der oben erläuterten Art und Weise entweder derart ausgebildet sind, dass die Spannkörper gegenüber dem Gehäuse eine rein radiale Bewegung beschreiben, oder aber derart ausgeführt sind, dass diese radiale Bewegung durch eine vorgegebene axiale Bewegung zum Zwecke des Niederzugs überlagert wird. Häufig treten in der Praxis jedoch Anwendungsfälle auf, in denen im Wechsel mit und ohne Niederzug gearbeitet werden muss, was bei Verwendung der genannten Spanneinrichtung jeweils einen Wechsel der Spanneinrichtung erforderlich macht. Auch kommt es vor, dass zum Zwecke der Bearbeitung eines konkreten Werkstücktyps eine Spanneinrichtung des einen oder des anderen Typs angeschafft wird und nachfolgend festgestellt wird, dass der jeweils andere Typ sich für den konkreten Anwendungsfall besser geeignet hätte.

### Aufgabe und Lösung

Aufgabe der Erfindung ist es daher, eine Spanneinrichtung gattungsgemäßer Art dahingehend weiterzubilden, dass diese flexiblere Anwendungsmöglichkeiten bietet.

Erfindungsgemäß wird dies dadurch erzielt, dass an der Spanneinrichtung einstellbar ist, ob und/oder in welchem Maß eine Verlagerung des Betätigungsorgans in Axialrichtung eine Bewegung des Spannkörpers in Axialrichtung gegenüber dem Gehäuse verursacht. Erfindungsgemäß ist somit vorgesehen, dass der Einfluss der Bewegung des Betätigungsorgans gegenüber dem Gehäuse auf die Axialbewegung des Spannkörpers gegenüber dem Gehäuse einstellbar ist, so dass fallweise eine rein radiale Einspannung und eine radiale und axiale Einspannung oder aber auch eine radiale und axiale Einspannung mit anpassbarem Maß der axialen Einspannung erzielt werden kann.

Vorzugsweise ist eine erfindungsgemäße Spanneinrichtung derart ausgebildet, dass sie über eine Übersetzungsmechanik verfügt. Diese Übersetzungsmechanik ist zur Herstellung einer ersten Zwangskopplung zwischen der axialen Verlagerung des Betätigungsorgans gegenüber dem Gehäuse einerseits und der axialen Verlagerung des der Spanneinheit gegenüber dem Gehäuse andererseits ausgebildet. Sie ist weiter zur Herstellung einer zweiten Zwangskopplung zwischen der axialen Verlagerung des Betätigungsorgans gegenüber dem Gehäuse einerseits und der radialen Verlagerung des der Spanneinheit gegenüber dem Gehäuse andererseits ausgebildet. Diese Übersetzungsmechanik ist einstellbar zur Beeinflussung, ob und/oder in welchem Maß eine Verlagerung des Betätigungsorgans in Axialrichtung eine Bewegung des Spannkörpers in Axialrichtung gegenüber dem Gehäuse verursacht.

Die Zwangskopplungen sind derart ausgestaltet, dass - bei einer definierten Einstellung - die Bewegung des Betätigungsorgans in definierter Art die radiale und ggf. axiale Verlagerung des Spannkörpers bewirkt. Für die genannte definierte Einstellung sind demnach jeder Relativstellung des Betätigungsorgans zum Gehäuse eine axiale und eine radiale Relativstellung des Spannkörpers zum Gehäuse zugeordnet. Durch Veränderung der Einstellung kann beeinflusst werden, ob überhaupt eine axiale Verlagerung des Spannkörpers mit der Bewegung des Betätigungsorgans einhergeht und/oder in welchem Maße diese Verlagerung des Spannkörpers während der Bewegung des Betätigungsorgans stattfindet. Die einfach änderbare Einstellung der Übersetzungsmechanik bestimmt also quasi den definierten Bewegungspfad des Spannkörpers in der durch Axialrichtung und Radialrichtung aufgespannten Ebene. Für eine vorgegebene Einstellung ist dieser Bewegungspfad ebenfalls definiert. Erheblich ist in im Zusammenhang mit dieser Weiterbildung, dass keine beispielsweise durch Federn bedingte Freiheitsgrade zwischen der axialen und der radialen Verlagerung des Spannkörpers verbleiben, die den Bewegungspfad beeinflussen könnten. Die Einstellbarkeit kann dabei stufenlos oder gestuft gegeben sein.

Die Zwangskopplungen werden vorzugsweise durch der Übersetzungsmechanik zugeordnete Kopplungseinrichtungen erzielt. Dabei findet vorzugsweise die eingangs genannten Gestaltung mit Spanneinheiten Verwendung, welche einen Spannkörper und eine Führungshülse aufweisen, die in voneinander abweichenden Führungsrichtungen beweglich sind, und welche in eingangs genannter Art über die erste und zweite Kopplungseinrichtung mit dem Betätigungsorgan gekoppelt sind. In diesem Falle ist vorzugsweise die zweite Kopplungseinrichtung einstellbar ausgebildet, so dass eine Verlagerung des Betätigungsorgans um eine definierte Distanz in Axialrichtung eine Verlagerung des Spannkörpers in Axialrichtung um eine Distanz bewirkt, die von der Einstellung der zweiten Kopplungseinrichtung abhängt, so dass durch die Einstellung der zweiten Kopplungseinrichtung mittelbar einstellbar ist, ob und/oder in welchem Maße eine Verlagerung des Betätigungsorgans in Axialrichtung eine Bewegung des Spannkörpers in Axialrichtung gegenüber dem Gehäuse verursacht.

Die gattungsgemäß und.erfindungsgemäß vorgesehenen Merkmale sind wie folgt zu verstehen. Bei dem Gehäuse der Spanneinrichtung handelt es sich um die Gesamtheit jener Teile der Spanneinrichtung, die bestimmungsgemäß während des Spannvorgangs zueinander ortsfest bleiben. Demgegenüber ist ein Betätigungsorgan, welches vorzugsweise zentrisch innerhalb des Gehäuses vorgesehen ist, in Axialrichtung verlagerbar. Bei einem solchen Betätigungsorgan handelt es sich vorzugsweise um eine Zugstange oder eine Druckstange, welche zentral auf alle im Zuge des Spannvorgangs bewegten Baugruppen wirkt und welche somit als einzige zur Herstellung eines Spannvorgangs bewegt werden muss. Die mindestens eine vorgesehene Spanneinheit umfasst als Hauptbestandteile eine gegenüber dem Gehäuse geführte Führungsbuchse und einen gegenüber der Führungsbuchse geführten Spannkörper. Die Führungsbuchse ist dabei vorzugsweise hohlrohrartig ausgebildet. Der Spannkörper ist dann vorzugsweise in den Hohlraum eingesetzt. Der Spannkörper selbst kann einstückig ausgebildet sein oder aus mehreren im Betrieb zueinander ortsfesten Einzelteilen bestehen. Er umfasst insbesondere auch Spannflächen, die bestimmungsgemäß unmittelbar in Kontakt mit dem zu spannenden Werkstück gelangen. Zum Zwecke der Führung entlang der Führungsbuchse weist der Spannkörper vorzugsweise einen zylindrischen Abschnitt auf, der insbesondere in den kanalartigen Innenraum der vorzugsweise hohlrohrartigen Führungsbuchse eingesetzt sein kann.

Die erste Kopplungseinrichtung ist dafür vorgesehen, in Reaktion auf die axiale Verlagerung des Betätigungsorgans gegenüber dem Gehäuse eine axiale Verlagerung der Führungsbuchse gegenüber dem Gehäuse zu bewirken. Dabei ist unter der axialen Verlagerung nicht zwingend eine rein axiale Bewegung zu verstehen, sondern eine Bewegung, die zumindest auch eine Richtungskomponente in Axialrichtung aufweist. Im Falle, dass die erste Führungsrichtung mit der Axialrichtung übereinstimmt, handelt es sich allerdings um eine reine Axialbewegung. Bei anderen Gestaltungen kann jedoch ebenfalls vorgesehen sein, dass die erste Führungsrichtung gegenüber der Axialrichtung angestellt ist. In einem solchen Falle geht mit der Axialverlagerung der Führungsbuchse auch eine Radialverlagerung einher.

Eine besonders einfache und vorteilhafte Gestaltung sieht vor, dass die erste Kopplungseinrichtung so ausgebildet ist, dass sie - bezogen auf die Axialrichtung - das Spannorgan und die Führungsbuchse fest miteinander koppelt. In diesem Falle wird die Führungsbuchse stets zumindest in Axialrichtung in gleichem Maße gegenüber dem Gehäuse bewegt wie das Betätigungsorgan.

Die zweite Kopplungseinrichtung, die erfindungsgemäß als einstellbare Kopplungseinrichtung vorgesehen ist, bewirkt zumindest bei geeigneter Einstellung der Kopplungseinrichtung, dass die axiale Verlagerung des Betätigungsorgans zu einer zumindest auch axialen Verlagerung des Spannkörpers führt, wobei diese axiale Verlagerung gegenüber dem Gehäuse sich zumindest hinsichtlich des Betrages, vorzugsweise jedoch auch hinsichtlich des Vorzeichens, von der axialen Verlagerung der Führungsbuchse gegenüber dem Betätigungsorgan unterscheidet. Aufgrund der Führung des Spannkörpers gegenüber der Führungsbuchse kommt es somit zu einer Relativverlagerung des Spannkörpers gegenüber der Führungsbuchse in der durch die zweite Führungsrichtung vorgegebenen Art. Die zweite Kopplungseinrichtung muss hierfür nicht zwingend unter Umgehung der Führungsbuchse unmittelbar zwischen dem Betätigungsorgan und dem Spannkörper vorgesehen sein. Sie kann stattdessen auch zwischen der Führungsbuchse, dem Gehäuse und dem Spannkörper wirken. Dies gilt insbesondere, wenn die Führungsbuchse in oben beschriebener Art stets axial ortsfest zum Betätigungsorgan verbleibt.

Die erfindungsgemäße Besonderheit liegt darin, dass die zweite Kopplungseinrichtung einstellbar ausgebildet ist. Diese Einstellbarkeit gestattet es, das Maß der durch eine Axialverlagerung des Betätigungsorgans bewirkten Axialverlagerung des Spannkörpers gegenüber dem Gehäuse festzulegen. Die Einstellbarkeit kann dabei so weit gehen, dass die axiale Verlagerung des Spannkörpers gegenüber dem Gehäuse vollständig oder nahezu vollständig unterbunden wird, so dass infolgedessen die Spannbewegung des Spannkörpers wiederum auf eine rein radiale Bewegung beschränkt ist. Das Einstellen der axialen Verlagerung des Spannkörpers in Reaktion auf eine axiale Verlagerung des Betätigungsorgans gestattet es, die Spanneinrichtung mit einem an das jeweilige Werkstück angepassten Niederzug zu betreiben. Für Niederzug nicht geeignete Werkstücke können rein radial gespannt werden. Für den Niederzug geeignete Werkstücke können per Niederzug in besonders vorteilhafter Weise gespannt werden.

Die einstellbare zweite Kopplungseinrichtung kann auf vielerlei Weise ausgebildet sein. Eine Möglichkeit bestünde beispielsweise darin, ein Zahnradgetriebe vorzusehen, bei welchem ein Austausch eines Übertragungszahnrades oder aber die Möglichkeit eines von mehreren Zahnrädern in Eingriff mit dem Spannkörper und dem Betätigungsorgan zu bringen, die gewünschte Einstellmöglichkeit böte.

Als besonders vorteilhaft wird es angesehen, wenn die zweite Kopplungseinrichtung einen Schwenkhebel aufweist, der sich insbesondere vorzugsweise am Gehäuse, am Betätigungsorgan und am Spannkörper abstützt. Der Schwenkhebel ist insbesondere vorzugsweise um eine erste Schwenkachse schwenkbar am Betätigungsorgan oder einem hierzu zumindest axial ortsfesten Bauteil angelenkt. Er ist weiter um eine zweite Schwenkachse schwenkbar am Gehäuse angelenkt. Weiterhin ist er um eine dritte Schwenkachse schwenkbar am Spannkörper oder einem hierzu zumindest axial ortsfesten Bauteil angelenkt. Die Verwendung eines Schwenkhebels, der um vorzugsweise orthogonal zur Axialrichtung ausgerichtete Schwenkachsen schwenkbar am Betätigungsorgan, dem Gehäuse und dem Spannkörper angelenkt ist, liegt insbesondere in der baulichen Einfachheit sowie in der Möglichkeit, hierdurch zuverlässig und nahezu wartungsfrei hohe Kräfte zu übertragen. Sofern die drei Schwenkachsen jeweils voneinander beabstandet sind, führt die axiale Verlagerung des Betätigungsorgans gegenüber dem Gehäuse im Zuge einer Spannbewegung zwangsläufig zu einem Verschwenken des Spannhebels und somit zu einer axialen Verlagerung des Spannkörpers. Bei den Schwenkachsen, insbesondere bei der ersten und der zweiten Schwenkachse, muss es sich nicht um Schwenkachsen handeln, die während eines Verschwenkens des Hebels lagefest zum Hebel verbleiben. Im Hinblick auf die dem Betätigungsorgan zugeordnete erste Schwenkachse ist eine baulich besonders einfache Gestaltung von Vorteil, bei der ein Ende des Hebels in einer nutartigen Aussparung des Betätigungsorgans eingefügt ist, wobei durch die Formgebung des Endes des Hebels und die nutartige Ausnehmung die Lage dieser Schwenkachse leicht variabel ist und üblicherweise durch den Berührpunkt des Hebels und der Nut bestimmt wird. Weiterhin ist es im Hinblick auf die erste und/oder die zweite Schwenkachse auch aufgrund der Notwendigkeit, eine mechanische Überbestimmung des Systems zu vermeiden, erforderlich, dass diese Schwenkachsen relativ zum Schwenkhebel beweglich sind. Insbesondere im Hinblick auf die zweite Schwenkachse ist es von Vorteil, wenn dies dadurch erzielt wird, dass am Schwenkhebel oder am Gehäuse ein Langloch vorgesehen ist, in das ein am jeweils anderen Teil angebrachter Bolzen eingreift.

Neben den genannten Vorteilen bei der Verwendung eines Schwenkhebels liegt ein im Zusammenhang mit der vorliegenden Erfindung besonders relevanter Vorteil darin, dass die Einstellbarkeit der maßgeblich durch den Schwenkhebel gebildeten zweiten Kopplungseinrichtung bei dieser Bauweise einfach zu erzielen ist. So kann zum Zwecke der Einstellbarkeit der zweiten Kopplungseinrichtung die Position der zweiten Schwenkachse relativ zum Gehäuse einstellbar sein. Hierdurch wird es möglich, den Abstand zwischen der zweiten und der dritten Schwenkachse einzustellen und somit die axiale Verlagerung des Spannkörpers zu beeinflussen. Je weiter die zweite und die dritte Schwenkachse voneinander entfernt sind, umso größer ist die axiale Verlagerung des Spannkörpers gegenüber dem Gehäuse bei einer axialen Verlagerung des Betätigungsorgans gegenüber dem Gehäuse. Je geringer der Abstand der zweiten und der dritten Schwenkachse voneinander ist, desto geringer ist auch der Einfluss einer axialen Verlagerung des Betätigungsorgans auf die axiale Verlagerung des Spannkörpers. Im Extremfall stimmen die zweite und die dritte Schwenkachse überein oder zumindest nahezu überein. Wenn dies der Fall ist, bewirkt das Verschwenken des Hebels in Reaktion auf eine axiale Verlagerung des Betätigungsorgans keine oder keine nennenswerte axiale Verlagerung des Spannkörpers. Es wird somit eine niederzugfreie Bewegung der Spannkörper erzielt. Da der Abstand der Schwenkachsen aus oben bezeichneten Gründen während eines Spannvorgangs veränderlich sein kann, ist die Einstellbarkeit der zweiten Kopplungseinrichtung über eine Anpassung des Abstandes der Schwenkachsen so zu verstehen, dass für eine definierte Ausgangslage des Betätigungsorgans gegenüber dem Gehäuse jene Variabilität des Schwenkachsabstandes besteht.

Zum Zwecke der Einstellbarkeit der zweiten Kopplungseinrichtung durch die Verlagerung der zweiten Schwenkachse bestehen verschiedene Möglichkeiten.

So ist es möglich, die Position der zweiten Schwenkachse relativ zum Gehäuse dadurch einstellbar zu machen, dass ein der Spanneinheit zugeordneter Gehäusestellabschnitt, der die Lage der zweiten Schwenkachse definiert, in mehreren voneinander abweichenden Positionen an einem Festlegungsbereich des Gehäuses festlegbar ist. Das Gehäuse umfasst in diesem Falle einen gegenüber anderen Teilen des Gehäuses beweglichen Gehäusestellabschnitt, der, beispielsweise durch Bohrungen für einen den Hebel durchdringenden Bolzen, die Lage der zweiten Schwenkachse relativ zum Gehäuse definiert. Dieser Gehäüsestellabschnitt kann in mehreren voneinander unterschiedlichen diskreten Positionen am Festlegungsbereich und somit relativ zu den anderen Gehäuseabschnitten befestigt werden. Solche mehreren diskreten Positionen lassen sich beispielsweise durch Haltebolzen realisieren, die je nach gewünschtem Niederzugverhalten in eine von mehreren möglichen Festlegungsbohrungen eingesteckt werden. Eine Alternative hierzu sieht ein Stellmittel, insbesondere eine Stellschraube, vor, die in insbesondere stufenloser Art und Weise die Festlegung der Position des Gehäusestellabschnitts gestattet.

Eine hiervon abweichende Gestaltung, die sich insbesondere anbietet, wenn der Wechsel des Niederzugverhaltens nur selten erforderlich ist, sieht vor, dass die Position der zweiten Schwenkachse relativ zum Gehäuse dadurch einstellbar ist, dass alternativ zueinander einer von mindestens zwei der Spanneinheit zugeordneten Gehäusestellabschnitten in einer definierten Position am Festlegungsbereich festgelegt wird, wobei die Gehäusestellabschnitte sich voneinander hinsichtlich der durch sie definierten Lage der zweiten Schwenkachse unterscheiden. Bei dieser Variante umfasst die Spanneinrichtung somit ein Set unterschiedlicher Gehäusestellabschnitte, die gegeneinander ausgetauscht werden können, um das gewünschte Niederzugverhalten zu erzielen.

Die Bezugnahme auf nur eine Spanneinheit sowie ihre jeweiligen Teilbaugruppen ist nicht beschränkend zu verstehen. Vorzugsweise weist eine erfindungsgemäße Spanneinrichtung eine Mehrzahl von Spanneinheiten der genannten Art auf, die jeweils im Wesentlichen baugleich sind, jedoch in unterschiedlicher Ausrichtung an der Spanneinrichtung vorgesehen sind, so dass insbesondere ihre Spannkörper während einer Spannbewegung aufeinander zu oder voneinander weg bewegt werden. Besonders vorteilhaft ist eine Gestaltung mit mindestens drei derartigen Spanneinheiten.

Bei einer Gestaltung der Spanneinrichtung mit mehreren Spanneinheiten verfügt vorzugsweise jede Spanneinheit über einen eigenen Gehäusestellabschnitt, wobei es insbesondere von Vorteil ist, wenn die Gehäusestellabschnitte der Spanneinheiten über ein gemeinsames Stellmittel hinsichtlich Ihrer Position einstellbar sind. Zu diesem Zweck kann ein gemeinsames Stellorgan vorgesehen sein, beispielsweise ein um eine in Richtung der Axialrichtung ausgerichtete Achse begrenzt drehbeweglicher Stellring, der auf die Lage aller Gehäusestellabschnitte wirkt, beispielsweise mittels Kulissenführungen. Dieser gemeinsame Stellring kann dann mittels des Stellmittels gegenüber den anderen Gehäuseabschnitten bewegt werden.

Die Erfindung betrifft weiterhin auch eine Arbeitsspindel für eine Werkzeugmaschine, die mit einer Spanneinrichtung oben beschriebener Art ausgerüstet ist. Umfasst ist von der Erfindung weiterhin eine Werkzeugmaschine mit einer solchen Arbeitsspindel.

### Kurzbeschreibung der Zeichnungen

Weitere Aspekte und Vorteile der Erfindung ergeben sich außer aus den Ansprüchen auch der nachfolgenden Beschreibung eines bevorzugten Ausführungsbeispiels der Erfindung, welches anhand der Figuren erläutert wird. Dabei zeigen:
- Fig. 1: eine erfindungsgemäße Werkzeugmaschine mit einer erfindungsgemäßen Spanneinrichtung,
- Fig. 2: die Spanneinrichtung der Fig. 1 in einer Explosionsdarstellung,
- Fig. 3a und 3b: die Funktionsweise der Spanneinrichtung der Fig. 1 und 2 bei einer ersten Einstellung einer Einstelleinrichtung,
- Fig. 4a und 4b: die Funktionsweise der Spanneinrichtung der Fig. 1 und 2 bei einer zweiten Einstellung einer Einstelleinrichtung und
- Fig. 5 und 6: Variationen zur Spanneinrichtung der vorangegangenen Figuren.

### Detaillierte Beschreibung des Ausführungsbeispiels

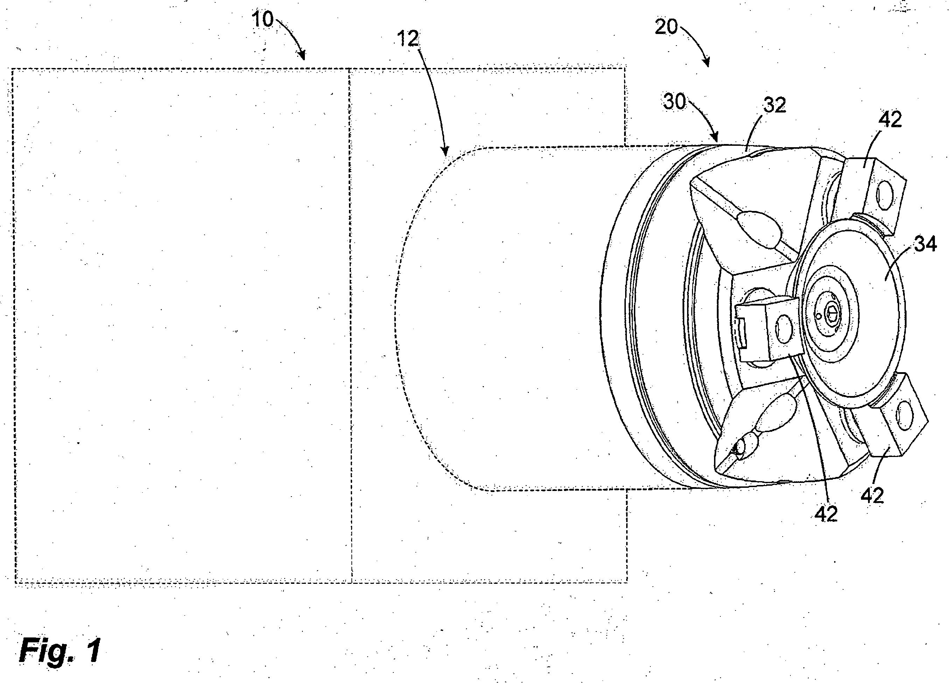

Fig. 1 zeigt eine erfindungsgemäße Werkzeugmaschine 10 mit einer Arbeitsspindel 12 und einer an der Arbeitsspindel angebrachten Spanneinrichtung 20. Dabei sind die Werkzeugmaschine 10 und die Arbeitsspindel 12 lediglich schematisch dargestellt.

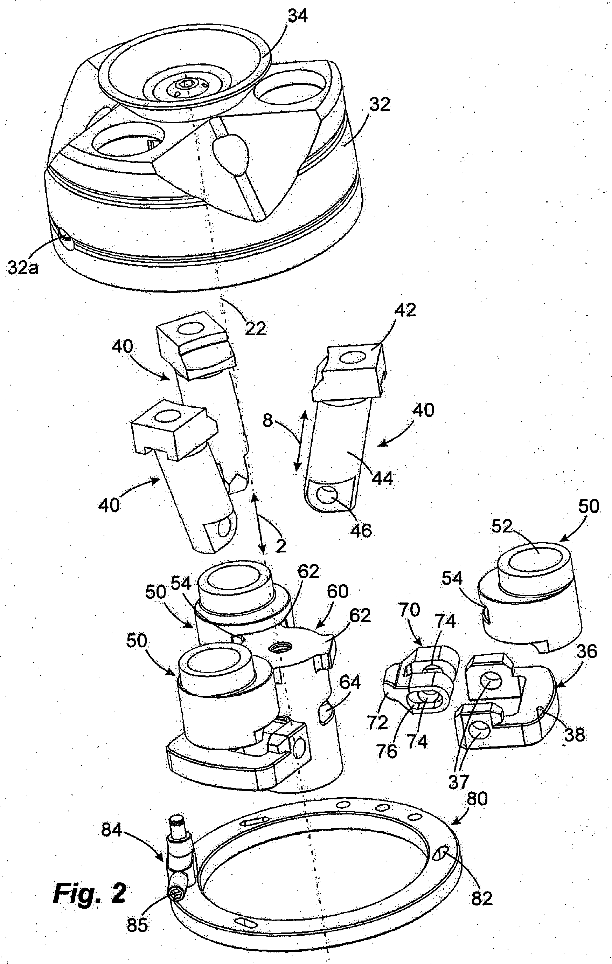

Die Spanneinrichtung 20, deren innerer Aufbau anhand der Explosionsgarstellung der Fig. 2 gut erkennbar ist, verfügt über ein Gehäuse 30 mit einem Gehäusehauptkörper 32, an dessen Stirnseite drei Spannbacken 42 vorgesehen sind, die umfänglich um einen werkstückspezifischen Anschlag 34 verteilt sind.

Bezug nehmend auf die Explosionsdarstellung der Fig. 2 ist erkennbar, dass diese Spannbacken 42 jeweils Teil von in sich starren Spannkörpern 40 sind. Diese weisen jeweils von den Spannbacken 42 ausgehend zylindrische Führungsabschnitte 44 auf. An den den Spannblöcken 42 gegenüberliegenden Enden sind Lagerbohrungen 46 vorgesehen, deren Funktionsweise im Weiteren noch erläutert wird. Die Führungsabschnitte 44 sind dabei gegenüber einer in Axialrichtung 2 erstreckten Mittelachse 22 der Spanneinrichtung um einen Winkel von 15° geneigt ausgebildet.

Sie sind bei montierter Spanneinrichtung in Führungskanälen 52 von Führungsbuchsen 50 in einer Führungsrichtung 6 beweglich angeordnet, wobei diese Führungskanäle 52 in der Fig. 2 nicht entnehmbarer Weise ebenfalls um 15° gegenüber der Mittelachse 22 geneigt sind.

Zur Verlagerung der Spannkörper 40 mit den Spannbacken 42 gegenüber dem Gehäusehauptkörper 32 des Gehäuses 30 ist ein Betätigungsorgan 60 vorgesehen, welches in nicht näher dargestellter Weise motorisch in Axialrichtung 2 verlagerbar ist. An seinem distalen Ende weist dieses Betätigungsorgan 60 radial nach außen weisende Ausleger 62 auf. Hierzu korrespondierend sind an der Außenseite der Führungsbuchsen 50 Ausnehmungen 54 vorgesehen, in die sich die Ausleger 62 erstrecken, so dass eine Axialverlagerung des Betätigungsorgans 60 stets eine ebensolche Axialverlagerung der drei Spannbuchsen 50 zur Folge hat.

Weiterhin ist auch eine Wirkkopplung zwischen der Axialverlagerung des Betätigungsorgans 60 und einer Axialverlagerung der Spannkörper 40 vorgesehen. Zu diesem Zweck sind an der Außenseite des Betätigungsorgans 60 nutartige Vertiefungen 64 vorgesehen, die der Aufnahme eines innenseitigen Endes 72 von Schwenkhebeln 70 dienen. Auf der gegenüberliegenden Seite weisen diese Schwenkhebel 70 zylindrische Bohrungen 74 zur Aufnahme eines nicht dargestellten Bolzens auf, der nicht nur durch die Bohrungen 74, sondern darüber hinaus durch die Bohrung 46 der Spannkörper 40 hindurch ragt. Außenseitig der Bohrungen 74 des Schwenkhebels 70 sind jeweils Langlöcher 76 vorgesehen. In diese ragen nicht dargestellte Bolzen hinein, die mit ihrem gegenüberliegenden Ende in Bohrungen 37 eines Gehäusestellabschnittes 36 fixiert sind. In in der Fig. 2 nur angedeuteten Weise sind an der Unterseite der Gehäusestellabschnitte 36 Steuerbolzen 38 vorgesehen, die in tangential und radial erstreckte Langlöcher 82 eines Stellrings 80 hineinragen. Dieser Stellring 80 ist gegenüber dem Gehäusehauptkörper 32 um die Mittelachse 22 rotativ beweglich, wobei ein Stellmittel 84 mit einer Stellschraube 85 vorgesehen ist, welches durch eine Öffnung 32a im Gehäusehauptkörper 32 hindurch ein Verdrehen des Stellrings 80 gegenüber dem Gehäusehauptkörper 32 gestattet. Dieses Verdrehen geht aufgrund der Kopplung der Gehäusestellabschnitte 36 über die Steuerbolzen 38 mit den Langlöchern 82 damit einher, dass alle Gehäusestellabschnitte 36 gemeinsam - bezogen auf die Mittelachse 2 - radial nach innen bzw. nach außen verlagert werden. Hierdurch kommt es auch zu einer Verlagerung der an den Gehäusestellabschnitten 36 vorgesehenen Bohrungen 37, so dass die nicht dargestellten hier eingesetzten Bolzen entlang der Langlöcher 76 des Hebels 70 nach außen verlagert werden.

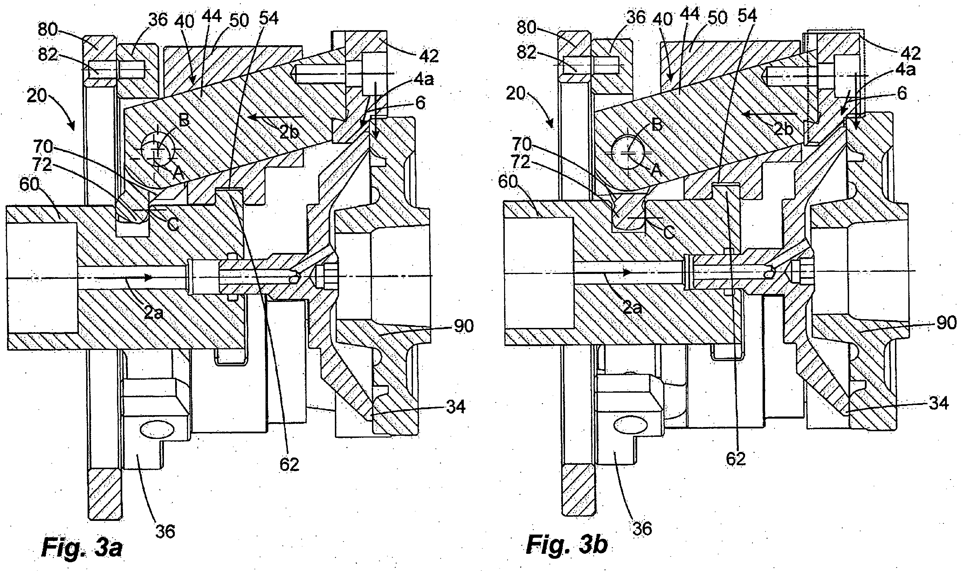

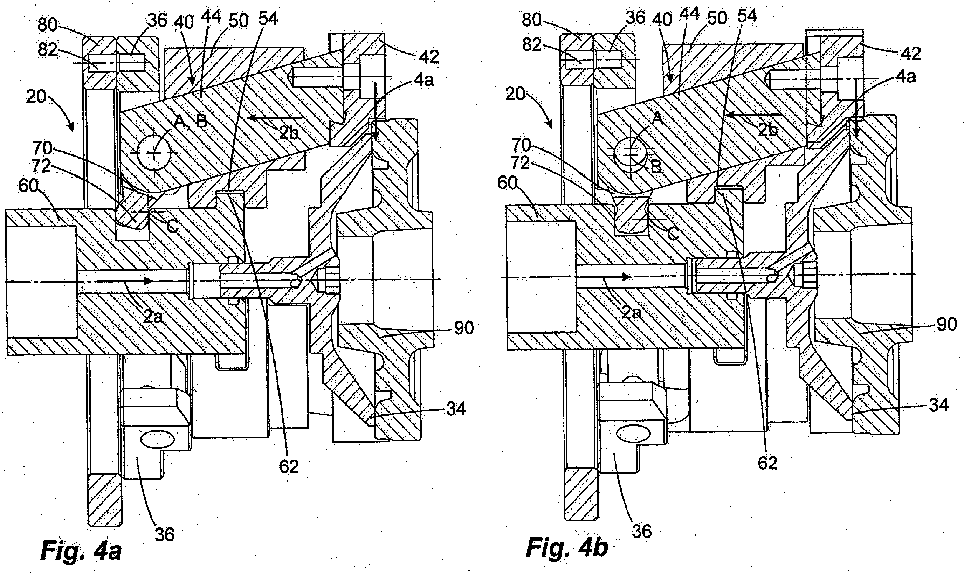

Die sich aus dem Zusammenwirken der beschriebenen Komponenten ergebende Funktionsweisen der Spanneinrichtung 20 werden nachfolgend anhand der Fig. 3a, 3b und 4a, 4b erläutert. Diese Figuren zeigen jeweils Schnittdarstellungen durch die Spanneinrichtung 20. Der Gehäusehauptkörper 32 ist dabei zur besseren Erfassbarkeit ausgeblendet.

Fig. 3a und 3b zeigen einen ersten Spannvorgang. Dieser findet ausgehend von einem Zustand der Spanneinrichtung 20 statt, in dem die Gehäusestellabschnitte 36 durch eine entsprechende Drehstellung des Stellrings 80 in ihrer radial zur Mittelachse 22 hinweisenden Endstellung angeordnet sind. Hieraus ergibt sich, dass in der Ausgangsstellung die durch die Bolzen in den Bohrungen 37 definierte Schwenkachse A deutlich beabstandet ist von der durch den Bolzen in den Bohrungen 74, 46 definierte Schwenkachse B.

Ausgehend von dem Zustand der Fig. 3a wird der Spannvorgang dadurch initiiert, dass das Spannorgan 60 in einer Richtung 2a verlagert wird. Dies führt aufgrund der Kopplung durch die Ausleger 62 und die Aussparungen 54 zu einer ebensolchen Verlagerung der Führungsbuchsen 50. Diese Verlagerung der Führungsbuchsen 50 in Richtung 2a bewirkt, dass die Spannkörper 40 mitsamt ihrer Spannbacken 42 in Rädialrichtung 4a aufeinander zu bewegt werden.

Gleichzeitig wird eine Schwenkbewegung der Schwenkhebel 70 bewirkt, die bezüglich des Betätigungsorgans 60 um eine Schwenkachse C erfolgt und durch die die Spannkörper 40 in Richtung 2b verlagert werden. Die resultierende Bewegung der Spannkörper 40 und damit der Spannbacken 42 ist durch den Pfeil 6 gekennzeichnet. Diese resultierende Bewegung bewirkt gleichzeitig ein radiales Einspannen des in den Fig. 3a und 3b dargestellten Werkstücks 90 und ein axiales Anpressen des Werkstücks 90 gegen den Anschlag 34. Zur Besserung Erfassbarkeit dieser Bewegung ist in Fig. 3b die Ausgangsstellung der dargestellten Spannbacke 42 gestrichelt dargestellt.

Die Fig. 4a und 4b zeigen einen zweiten Spannvorgang, der sich vom ersten Spannvorgang dadurch unterscheidet, dass mittels der Stellschraube 85 der Stellring 80 so weit verdreht wurde, dass die Gehäusestellabschnitte 36 in ihrer radial nach außen gewandten Endlage sind. Dies wiederum bewirkt, dass in dieser Ausgangslage die Schwenkachsen A und B miteinander übereinstimmen. Wenn bei dieser Einstellung nun der Spannvorgang durch Verlagerung des Betätigungsorgans 60 in Richtung des Pfeils 2a erfolgt, so bewirkt dies wiederum eine entsprechende Bewegung der Führungshülsen 50 in Richtung 2a und eine radiale Verlagerung der Spannbacken 42 gemeinsam mit den Spannkörpern 40 in Richtung 4a radial nach innen. Dabei kommt es jedoch nicht oder kaum zu einer axialen Verlagerung der Spannkörper 40, da die ebenfalls stattfindende Schwenkbewegung der Schwenkhebel 70 zumindest anfangs um die gemeinsame Schwenkachse A, B erfolgt, so dass dementsprechend die Spannkörper 40 nicht in Richtung 2b verlagert werden.

Zwar kommt es im Zuge des Spannvorgangs in der aus Fig. 4b ersichtlichen Weise zu einer sich vergrößernden Beabstandung der Schwenkachsen A, B. Da dies jedoch nur in geringem Maße und erst gegen Ende der Spannbewegung der Fall ist, führt dies nicht mehr zu einer signifikanten. Axialverlagerung der Spannbacken 42. Auch ändern die Schwenkachsen A, B beim Übergang aus der Position der Fig. 4a in die Position der Fig. 4b ihre Relativlage nicht in Hinblick auf die Axialrichtung 2. Abweichend vom Spannvorgang der Fig. 3a und 3b findet der Spannvorgang der Fig. 4a und 4b im Hinblick auf die Spannbacken 42 daher nahezu ausschließlich radial statt.

Somit ist es möglich, in Abhängigkeit des Werkstücks und der hierfür optimalen Spannstrategie die Spanneinrichtung 20 mittels der Stellschraube 85 anzupassen. Ein nahezu niederzugsfreier Spannvorgang und ein Spannvorgang mit Niederzug können mit dem gleichen Werkzeug bewerkstelligt werden.

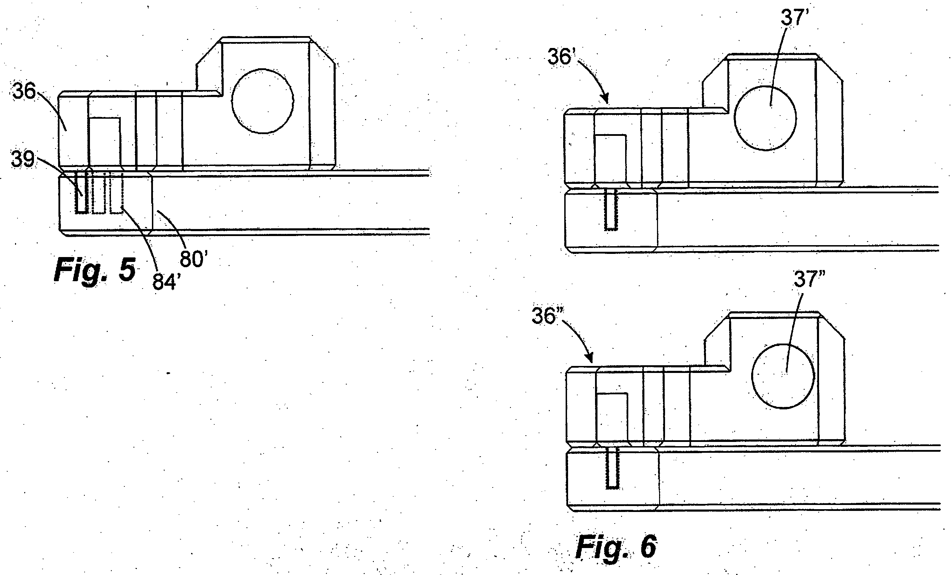

Die Fig. 5 und 6 zeigen alternative Möglichkeiten der Einstellbarkeit der Lage der Schwenkachse A. Im Falle der Ausgestaltung der Fig. 5 ist kein verdrehbarer Stellring 80 vorgesehen. Stattdessen ist ein feststehender Ring 80' vorgesehen, der in Radialrichtung beabstandete Aussparu ngen 84' aufweist. An den Gehäusestellabschnitten 36 ist jeweils ein Sicherungsstift 39 angebracht, der je nach gewünschtem Niederzugsverhalten in eine dieser Bohrungen 84' eingesetzt werden kann. Somit ist eine schrittweise Verstellung des Niederzuges möglich.

Die Variante der Fig. 6 sieht eine weitere Ausgestaltung vor. Bei dieser sind der Spanneinrichtung mehrere unterschiedliche Gehäusestellabschnitte 36', 36" vorgesehen, in die die Bohrungen 37', 37", die die Lage der Schwenkachse A definieren, an unterschiedlicher Stelle eingebracht sind. Somit kann durch Austausch der Gehäusestellabschnitte 36', 36" die gewünschte Art des Spannvorgangs festgelegt werden. Diese Gestaltung eignet sich insbesondere dann, wenn der Wechsel von einem niederzugsbehafteten Spannvorgang zu einem niederzugsfreien Spannvorgang selten erforderlich ist.

## Patentansprüche

1. Spanneinrichtung (20) zur Festlegung eines Werkstücks (90) mit
- einem Gehäuse (32),
- einem gegenüber dem Gehäuse (32) in einer Axialrichtung verlagerbaren Betätigungsorgan (60) zur Einleitung einer Betätigungskraft zum Zwecke der Herstellung eines Spannzustandes, und
- mindestens einer Spanneinheit (40, 50) umfassend einen Spannkörper (40),
wobei
- das Betätigungsorgan (60) mit der Spanneinheit (40, 50) derart wirkgekoppelt ist, dass eine Verlagerung des Betätigungsorgans (60) in Axialrichtung (2) eine Bewegung des Spannkörpers (40) in einer zur Axialrichtung (2) orthogonalen Radialrichtung (4a) gegenüber dem Gehäuse (32) verursacht,
**dadurch gekennzeichnet, dass**
ah der Spanneinrichtung einstellbar ist, ob und/oder in welchem Maß eine Verlagerung des Betätigungsorgans (60) in Axialrichtung (2) eine Bewegung des Spannkörpers (40) in Axialrichtung (2) gegenüber dem Gehäuse (32) verursacht.

2. Spanneinrichtung nach Anspruch 1,
**gekennzeichnet durch**
eine Übersetzungsmechanik (50, 54, 62, 64, 70), die zur Herstellung
- einer ersten Zwangskopplung zwischen der axialen Verlagerung des Betätigungsorgans (60) gegenüber dem Gehäuse (32) einerseits und der axialen Verlagerung des der Spanneinheit (40) gegenüber dem Gehäuse (32) andererseits, und
- einer zweiten Zwangskopplung zwischen der axialen Verlagerung des Betätigungsorgans (60) gegenüber dem Gehäuse (32) einerseits und der radialen Verlagerung des der Spanneinheit (40) gegenüber dem Gehäuse (32) andererseits,
ausgebildet ist, wobei diese Übersetzungsmechanik zur Beeinflussung, ob und/oder in welchem Maß eine Verlagerung des Betätigungsorgans (60) in Axialrichtung (2) eine Bewegung des Spannkörpers (40) in Axialrichtung (2) gegenüber dem Gehäuse (32) verursacht, einstellbar ist.

3. Spanneinrichtung nach Anspruch 1 oder 2,
**dadurch gekennzeichnet, dass**
- die Spanneinheit (40, 50) jeweils eine am Gehäuse entlang einer ersten Führungsrichtung (2) linear geführten Führungsbuchse (50) und einen an der Führungsbuchse (50) entlang einer zweiten Führungsrichtung (8), die nichtparallel zur ersten Führungsrichtung (2) ausgerichtet ist, geführten Spannkörper (40) umfasst,
- eine erste Kopplungseinrichtung (54, 62) der Spanneinheit zur mechanische Wirkkopplung zwischen der Bewegung des Betätigungsorgans (60) in Axialrichtung (2) einerseits und der Bewegung der Führungsbuchse (50) in Axialrichtung (2) andererseits vorgesehen ist,
- eine zweite Kopplungseinrichtung (64, 70) der Spanneinheit zur mechanische Wirkkopplung zwischen der Bewegung des Betätigungsorgans (60) in Axialrichtung (2) einerseits und der Bewegung des Spännkörpers (40) in Axialrichtung (2) andererseits vorgesehen ist,
- die Kopplungseinrichtungen (54, 62, 64, 70) der Spanneinheit (40, 50) derart ausgebildet sind, dass eine Verlagerung des Betätigungsorgans (60) in Axialrichtung (2) eine Bewegung des Spannkörpers (40) in einer zur Axialrichtung (2) orthogonalen Radialrichtung (4a) verursacht, und
- zur Einstellung der Spanneinrichtung die zweite Kopplungseinrichtung (64, 70) einstellbar ausgebildet ist, so dass eine Verlagerung des Betätigungsorgans (60) um eine definiertes Distanz in Axialrichtung (2) eine Verlagerung des Spannkörpers (40) in Axialrichtung (2) um eine Distanz bewirkt, die von der Einstellung der zweiten Kopplungseinrichtung (64, 70) abhängt, so dass durch die Einstellung der zweiten Kopplungseinrichtung (64, 70) mittelbar einstellbar ist, ob und/oder in welchem Maß eine Verlagerung des Betätigungsorgans (60) in Axialrichtung (2) eine Bewegung des Spannkörpers (40) in Axialrichtung (2) gegenüber dem Gehäuse (32) verursacht.

4. Spanneinrichtung nach Anspruch 3,
**dadurch gekennzeichnet, dass**
die erste Kopplungseinrichtung (54, 62) die Führungsbuchse (50) und das Betätigungsorgan (60) bezogen auf die Axialrichtung (2) ortsfest zueinander koppelt.

5. Spanneinrichtung nach Anspruch 3 oder 4,
**dadurch gekennzeichnet**
beide Führungsrichtungen (2, 8) mit der Axialrichtung (2) einen Winkel von nicht mehr als 30° einschließen, wobei vorzugsweise eine der Führungsrichtungen (2) mit der Axialrichtung (2) übereinstimmt.

6. Spanneinrichtung nach einem der Ansprüche 3 bis 5
**dadurch gekennzeichnet, dass**
die zweite Kopplungseinrichtung (64, 70) einen Schwenkhebel (70) aufweist,
- der um eine erste Schwenkachse (C) schwenkbar am Betätigungsorgan (60) oder einem hierzu zumindest axial ortsfesten Bauteil angelenkt ist,
- der um eine zweite Schwenkachse (A) schwenkbar am Gehäuse (30) angelenkt ist und
- der um eine dritte Schwenkachse (B) schwenkbar am Spannkörper (40) oder einem hierzu zumindest axial ortsfesten Bauteil angelenkt ist.

7. Spanneinrichtung nach Anspruch 6,
**dadurch gekennzeichnet, dass**
zum Zwecke der Einstellbarkeit der zweiten Kopplungseinrichtung (64, 70) die Position der zweiten Schwenkachse (A) relativ zum Gehäuse (30) einstellbar ist.

8. Spanneinrichtung nach Anspruch 7,
**dadurch gekennzeichnet, dass**
die Position der zweiten Schwenkachse (A) relativ zum Gehäuse (30) dadurch einstellbar ist, dass ein der Spanneinheit (40) zugeordneter Gehäusestellabschnitt (36), der die Lage der zweiten Schwenkachse (A) definiert, in mehreren voneinander abweichenden Positionen an einem Festlegungsbereich (80, 80') des Gehäuses festlegbar ist.

9. Spanneinrichtung nach Anspruch 8,
**dadurch gekennzeichnet, dass**
- der Gehäusestellabschnitt (36) in einer von mehreren diskreten Positionen (84') am Festlegungsbereich (80) festlegbar ist oder
- ein Stellmittel (84, 85), insbesondere mit einer Stellschraube (84), vorgesehen ist, mittels dessen die Position des Gehäusestellabschnitts (36) stufenlos einstellbar ist.

10. Spanneinrichtung nach Anspruch 7,
**dadurch gekennzeichnet, dass**
die Position der zweiten Schwenkachse (A) relativ zum Gehäuse (30) dadurch einstellbar ist, dass alternativ zueinander einer von mindesten zwei der Spanneinheit zugeordneten Gehäusestellabschnitten (36', 36") in einer definierten Position am Festlegungsbereich (80) festgelegt wird, wobei die Gehäusestellabschnitte (36', 36") sich voneinander hinsichtlich der durch sie definierten Lage der zweiten Schwenkachse (A) unterscheiden.

11. Spanneinrichtung (20) nach einem der vorstehenden Ansprüche,
**dadurch gekennzeichnet, dass**
die Spanneinrichtung (20) eine Mehrzahl von Spanneinheiten (40, 50) der genannten Art aufweist.

12. Spanneinrichtung nach Anspruch 11,
**dadurch gekennzeichnet, dass**
die Spanneinheiten (40, 50) jeweils über einen Gehäusestellabschnitt (36, 36', 36") verfügen, wobei die Gehäusestellabschnitte (36) der Spanneinheiten vorzugsweise über ein gemeinsames Stellmittel (84, 85) hinsichtlich ihrer Position einstellbar sind.

13. Arbeitsspindel (12) für eine Werkzeugmaschine (10) mit einer Spanneinrichtung (20) zum Festspannen eines Werkstücks (90),
**dadurch gekennzeichnet, dass**
die Spanneinrichtung (20) nach einem der Ansprüche 1 bis 12 ausgebildet ist.

14. Werkzeugmaschine (10) mit einer drehbaren Arbeitsspindel (12),
**dadurch gekennzeichnet, dass**
die Arbeitsspindel (12) nach Anspruch 13 ausgebildet ist.

## Claims

1. Clamping device (20) for fixing a workpiece (90), comprising
- a housing (32),
- an actuating member (60), which is displaceable in an axial direction in relation to the housing (32), for introducing an actuating force for the purpose of producing a clamped condition, and
- at least one clamping unit (40, 50) comprising a clamping body (40),
wherein
- the actuating member (60) is operatively coupled to the clamping unit (40, 50) in such a manner that a displacement of the actuating member (60) in the axial direction (2) causes a movement of the clamping body (40) in relation to the housing (32) in a radial direction (4a) which is orthogonal to the axial direction (2),
**characterized in that**
whether and/or to what extent a displacement of the actuating member (60) in the axial direction (2) causes a movement of the clamping body (40) in the axial direction (2) in relation to the housing (32) is adjustable on the clamping device.

2. Clamping device according to claim 1, **characterized by** a transmission mechanism (50, 54, 62, 64, 70) configured for producing
- a first forced coupling between the axial displacement of the actuating member (60) in relation to the housing (32), on the one hand side, and the axial displacement of the clamping unit (40) in relation to the housing (32), on the other hand side, and
- a second forced coupling between the axial displacement of the actuating member (60) in relation to the housing (32), on the one hand side, and the radial displacement of the clamping unit (40) in relation to the housing (32), on the other hand side,
wherein said transmission mechanism for controlling whether and/or to what extent a displacement of the actuating member (60) in the axial direction (2) causes a movement of the clamping body (40) in the axial direction (2) in relation to the housing (32) is adjustable.

3. Clamping device according to claim 1 or 2, **characterized in that**
- the clamping unit (40, 50) comprises in each case a guide bushing (50) linearly guided on the housing along a first guiding direction (2) and a clamping body (40) guided on the guide bushing (50) along a second guiding direction (8), which is oriented non-parallel to the first guiding direction (2),
- a first coupling device (54, 62) of the clamping unit is provided for operative mechanical coupling between the movement of the actuating member (60) in the axial direction (2), on the one hand side, and the movement of the guide bushing (50) in the axial direction (2), on the other hand side,
- a second coupling device (64, 70) of the clamping unit is provided for operative mechanical coupling between the movement of the actuating member (60) in the axial direction (2), on the one hand side, and the movement of the clamping body (40) in the axial direction (2), on the other hand side,
- the coupling devices (54, 62, 64, 70) of the clamping unit (40, 50) are configured such that a displacement of the actuating member (60) in the axial direction (2) causes a movement of the clamping body (40) in a radial direction (4a) which is orthogonal to the axial direction (2), and
- for adjusting the clamping device, the second coupling device (64, 70) is configured to be adjustable, so that a displacement of the actuating member (60) along a defined distance in the axial direction (2) causes a displacement of the clamping body (40) in the axial direction (2) along a distance that is dependent on the adjustment of the second coupling device (64, 70), so that by the adjustment of the second coupling device (64, 70) it is indirectly adjustable whether and/or to what extent a displacement of the actuating member (60) in the axial direction (2) in relation to the housing (32) causes a movement of the clamping body (40) in the axial direction (2).

4. Clamping device according to claim 3, **characterized in that** via the first coupling device (54, 62) the guide bushing (50) and the actuating member (60) are coupled in relation to the axial direction (2) in a mutually fixed position.

5. Clamping device according to claim 3 or 4, **characterized in that** both guiding directions (2, 8) include an angle of not more than 30° with the axial direction (2), wherein preferably one of the guiding directions (2) coincides with the axial direction (2).

6. Clamping device according to any one of claims 3 to 5, **characterized in that** the second coupling device (64, 70) has a pivoting lever (70) which is
- articulated on the actuating member (60) or a component, which is at least axially in a fixed position thereto, to be pivotable about a first pivot axis (C),
- articulated on the housing (30) to be pivotable about a second pivot axis (A), and
- articulated on the clamping body (40) or a component, which is at least axially in a fixed position thereto, to be pivotable about a third pivot axis (B).

7. Clamping device according to claim 6, **characterized in that** for the purpose of adjusting the second coupling device (64, 70) the position of the second pivot axis (A) relative to the housing (30) is adjustable.

8. Clamping device according to claim 7, **characterized in that** the position of the second pivot axis (A) relative to the housing (30) is adjustable **in that** a housing setup portion (36) assigned to the clamping unit (40) and defining the location of the second pivot axis (A) is settable in a plurality of mutually different positions on a setting range (80, 80') of the housing.

9. Clamping device according to claim 8, **characterized in that**
- the housing setup portion (36) is settable in one of a plurality of discrete positions (84') on the setting range (80), or
- an adjusting means (84, 85), in particular an adjusting screw (84), is provided by means of which the position of the housing setup portion (36) is continuously adjustable.

10. Clamping device according to claim 7, **characterized in that** the position of the second pivot axis (A) relative to the housing (30) is adjustable **in that**, as an alternative to each other, one of at least two housing setup portions (36', 36") assigned to the clamping unit is set in a defined position on the setting range (80), wherein the housing setup portions (36', 36") are different one from the other as to the location of the second pivot axis (A) defined thereby.

11. Clamping device (20) according to any one of the preceding claims, **characterized in that** the clamping device (20) includes a plurality of clamping units (40, 50) of the above mentioned type.

12. Clamping device according to claim 11, **characterized in that** the clamping units (40, 50) each have a housing setup portion (36, 36', 36"), wherein the housing setup portions (36) of the clamping units preferably are adjustable as to their position via a common adjusting means (84, 85).

13. Working spindle (12) for a machine tool (10) having a clamping device (20) for fixedly clamping a workpiece (90), **characterized in that** the clamping device (20) is configured according to any one of claims 1 to 12.

14. Machine tool (10) having a rotating working spindle (12), **characterized in that** the working spindle (12) is configured according to claim 13.

## Revendications

1. Dispositif de serrage (20) pour la fixation d'une pièce (90), avec
- un boîtier (32),
- un organe d'actionnement (60) déplaçable dans une direction axiale par rapport au boîtier (32) pour l'introduction d'une force d'actionnement en vue de la réalisation d'un état de serrage,
- au moins une unité de serrage (40, 50) comprenant un corps de serrage (40),
dans lequel
- l'organe d'actionnement (60) est activement couplé à l'unité de serrage (40, 50), de telle manière qu'un déplacement de l'organe d'actionnement (60) en direction axiale (2) provoque un mouvement du corps de serrage (40) dans une direction radiale (4a) orthogonale à la direction axiale (2) par rapport au boîtier (32),
**caractérisé en ce que** l'on peut régler au dispositif de serrage si et/ou dans quelle mesure un déplacement de l'organe d'actionnement (60) en direction axiale (2) provoque un mouvement du corps de serrage (40) en direction axiale (2) par rapport au boîtier (32).

2. Dispositif de serrage selon la revendication 1, **caractérisé par** un mécanisme de conversion (50, 54, 62, 64, 70), qui est conçu pour la réalisation
- d'un premier couplage forcé entre le déplacement axial de l'organe d'actionnement (60) par rapport au boîtier (32) d'une part et le déplacement axial de celui de l'unité de serrage (40) par rapport au boîtier (32) d'autre part, et
- d'un deuxième couplage forcé entre le déplacement axial de l'organe d'actionnement (60) par rapport au boîtier (32) d'une part et le déplacement radial de celui de l'unité de serrage (40) par rapport au boîtier (32) d'autre part,
dans lequel ce mécanisme de conversion peut être réglé pour influencer si et/ou dans quelle mesure un déplacement de l'organe d'actionnement (60) en direction axiale (2) provoque un mouvement du corps de serrage (40) en direction axiale (2) par rapport au boîtier (32).

3. Dispositif de serrage selon la revendication 1 ou 2, **caractérisé en ce que**
- l'unité de serrage (40, 50) comprend respectivement une douille de guidage (50) guidée linéairement sur le boîtier le long d'une première direction de guidage (2) et un corps de serrage (40) guidé sur la douille de guidage (50) le long d'une deuxième direction de guidage (8), qui n'est pas orientée parallèlement à la première direction de guidage (2),
- il est prévu un premier dispositif de couplage (54, 62) de l'unité de serrage pour le couplage actif mécanique entre le mouvement de l'organe d'actionnement (60) en direction axiale (2) d'une part et le mouvement de la douille de guidage (50) en direction axiale (2) d'autre part,
- il est prévu un deuxième dispositif de couplage (64, 70) de l'unité de serrage pour le couplage actif mécanique entre le mouvement de l'organe d'actionnement (60) en direction axiale (2) d'une part et le mouvement du corps de serrage (40) en direction axiale (2) d'autre part,
- les dispositifs de couplage (54, 62, 64, 70) de l'unité de serrage (40, 50) sont réalisés de telle manière qu'un déplacement de l'organe d'actionnement (60) en direction axiale (2) provoque un mouvement du corps de serrage (40) dans une direction radiale (4a) orthogonale à la direction axiale (2), et
- pour le réglage du dispositif de serrage, le deuxième dispositif de couplage (64, 70) est réalisé de façon réglable, de telle manière qu'un déplacement de l'organe d'actionnement (60) sur une distance définie en direction axiale (2) provoque un déplacement du corps de serrage (40) en direction axiale (2) sur une distance, qui dépend du réglage du deuxième dispositif de couplage (64, 70), de telle manière que par le réglage du deuxième dispositif de couplage (64, 70) on puisse régler indirectement si et/ou dans quelle mesure un déplacement de l'organe d'actionnement (60) en direction axiale (2) provoque un déplacement du corps de serrage (40) en direction axiale (2) par rapport au boîtier (32).

4. Dispositif de serrage selon la revendication 3, **caractérisé en ce que** le premier dispositif de couplage (54, 62) couple la douille de guidage (50) et l'organe d'actionnement (60) solidairement l'un à l'autre par rapport à la direction axiale (2).

5. Dispositif de serrage selon la revendication 3 ou 4, **caractérisé en ce que** les deux directions de guidage (2, 8) forment avec la direction axiale (2) un angle qui n'est pas supérieur à 30°, dans lequel une des directions de guidage (2) coïncide de préférence avec la direction axiale (2).

6. Dispositif de serrage selon l'une quelconque des revendications 3 à 5, **caractérisé en ce que** le deuxième dispositif de couplage (64, 70) présente un levier pivotant (70),
- qui est articulé de façon pivotante autour d'un premier axe de pivotement (C) sur l'organe d'actionnement (60) ou sur un composant au moins axialement solidaire de celui-ci,
- qui est articulé de façon pivotante autour d'un deuxième axe de pivotement (A) sur le boîtier (30), et
- qui est articulé de façon pivotante autour d'un troisième axe de pivotement (B) sur le corps de serrage (40) ou sur un composant au moins axialement solidaire de celui-ci.

7. Dispositif de serrage selon la revendication 6, **caractérisé en ce que**, pour que le réglage du deuxième dispositif de couplage (64, 70) soit possible, la position du deuxième axe de pivotement (A) par rapport au boîtier (30) est réglable.

8. Dispositif de serrage selon la revendication 7, **caractérisé en ce que** la position du deuxième axe de pivotement (A) par rapport au boîtier (30) est réglable, du fait qu'une partie de réglage de boîtier (36) associée à l'unité de serrage (40), et qui définit la position du deuxième axe de pivotement (A), peut être fixée dans plusieurs positions différant l'une de l'autre sur une région de fixation (80, 80') du boîtier.

9. Dispositif de serrage selon la revendication 8, **caractérisé en ce que**
- la partie de réglage de boîtier (36) peut être fixée dans une de plusieurs positions discrètes (84') sur la région de fixation (80) ou
- il est prévu un moyen de réglage (84, 85), en particulier avec une vis de réglage (84), au moyen duquel la position de la partie de réglage de boîtier (36) peut être réglée en continu.

10. Dispositif de serrage selon la revendication 7, **caractérisé en ce que** la position du deuxième axe de pivotement (A) par rapport au boîtier (30) peut être réglée du fait que, en alternance l'une à l'autre, une d'au moins deux parties de réglage de boîtier (36', 36") associées à l'unité de serrage est fixée dans une position définie sur la région de fixation (80), dans lequel les parties de réglage de boîtier (36', 36") se distinguent l'une de l'autre en ce qui concerne la position du deuxième axe de pivotement (A) qu'elles définissent.

11. Dispositif de serrage (20) selon l'une quelconque des revendications précédentes, **caractérisé en ce que** le dispositif de serrage (20) présente une multiplicité d'unités de serrage (40, 50) du type précité.

12. Dispositif de serrage selon la revendication 11, **caractérisé en ce que** les unités de serrage (40, 50) disposent chacune d'une partie de réglage de boîtier (36, 36', 36"), dans lequel les parties de réglage de boîtier (36) des unités de serrage sont réglables quant à leur position de préférence au moyen d'un moyen de réglage commun (84, 85).

13. Broche de travail (12) pour une machine-outil (10) avec un dispositif de serrage (20) destinée au montage d'une pièce (90), **caractérisée en ce que** le dispositif de serrage (20) est réalisé selon l'une quelconque des revendications 1 à 12.

14. Machine-outil (10) avec une broche de travail rotative (12), **caractérisée en ce que** la broche de travail (12) est réalisée selon la revendication 13.
